# EUROPÄISCHE PATENTSCHRIFT

(11) **EP 0 518 242 B1**
(45) Veröffentlichungstag und Bekanntmachung des Hinweises auf die Patenterteilung: **21.02.1996**
(21) Anmeldenummer: 92109609.5
(22) Anmeldetag: 06.06.1992
(51) Int. Cl.: B23D 37/00

(54) **Verfahren zur spanenden Bearbeitung von Rotationsflächen an Werkstücken, vorzugsweise an Kurbelwellen, sowie scheibenförmiges Werkzeug zur Durchführung eines solchen Verfahrens**
Method and tool for working cylindrical surfaces on work-pieces
Méthode et outil pour l'usinage de surfaces cylindriques à des pièces

(30) Priorität: 11.06.1991 DE 4119162
(43) Veröffentlichungstag der Anmeldung: 16.12.1992
(73) Patentinhaber: Gebr. Heller Maschinenfabrik GmbH, D-72622 Nürtingen (DE)
(72) Erfinder:
(74) Vertreter: Kohl, Karl-Heinz

(56) Entgegenhaltungen:
- EP-A- 0 286 771
- US-A- 2 232 324
- WERKSTATT UND BETRIEB. Bd. 123, Nr. 12, Dezember 1990, MUNCHEN DE Seiten 915 - 920; AUGSTEN & SCHMID: 'Drehen-Drehräumen-ein neues Verfahren zum Fertigen von Kurbel-und Nockenwellen'

## Beschreibung

Die Erfindung betrifft ein Verfahren zur spanenden Bearbeitung von Rotationsflächen an Werkstücken, vorzugsweise an Kurbelwellen, nach dem Oberbegriff des Anspruches 1 sowie ein scheibenförmiges Werkzeug zur Durchführung des Verfahrens nach dem Oberbegriff des Anspruches 5.

Bei der Bearbeitung von Kurbelwellen ist es bekannt (EP-PS 0 211 216, DE-OS 35 23 274), zunächst eine Grobbearbeitung der Kurbelwelle durch radiales Einstechen mit Profilmeißeln durchzuführen. Im Anschluß an diese Grobdrehbearbeitung wird die Schlichtbearbeitung der Kurbelwelle durch Drehräumen vorgenommen, bei dem die Kurbelwelle relativ schnell rotiert, während das scheibenförmige Werkzeug mit verhältnismäßig geringer Geschwindigkeit gedreht wird. Für jede Breite eines Kurbelwellenzapfens müssen Sonderschneiden für den Schlichtdrehräumvorgang verwendet werden, da die Schneidkanten unter einem Winkel zur Drehachse des Werkzeuges verlaufen und zusätzlich bombiert ausgebildet sein müssen. Die in Sonderanfertigung hergestellten Schneiden werden nur in kleinen Stückzahlen gefertigt und haben zudem nur zwei Schneidkanten. Dadurch sind die Schneidstoffkosten beim Schlichtdrehräumen hoch. Um zylindrische Zapfen zu erzeugen, sind im Werkzeug für die zum Schlichtdrehräumen vorgesehenen Schneiden komplizierte Plattensitze erforderlich. Beim Drehräumen dringen die Schlichtschneiden unter einem sehr großen negativen Winkel in die Kurbelwelle ein, wodurch sehr hohe Normalkräfte entstehen. Dies führt zu einem verstärkten Schneidenverschleiß an der Schlichtschneide und zu einem verstärkten Ausbiegen der Kurbelwelle während des Drehräumvorganges. Als Folge hiervon tritt beim Schlichtdrehräumen im hohen Maße eine Ratterneigung auf, die auch zu Genauigkeitseinbußen führt. Bei der Stahlbearbeitung im Drehräumverfahren werden außerdem lange Wirrspäne erzeugt, die einen einwandfreien Spänefluß im Werkzeug und in der Maschine nicht mehr gewährleisten. Insbesondere bei automatisch arbeitenden Maschinen ist die Abfuhr dieser langen Wirrspäne schwierig und aufwendig. Diese Wirrspäne sind zudem bei Aufmaßschwankungen sehr unterschiedlich.

Der Erfindung liegt die Aufgabe zugrunde, das gattungsgemäße Verfahren und das gattungsgemäße scheibenförmige Werkzeug so auszubilden, daß als Schlichtschneiden allgemein im Handel erhältliche Schneidplatten verwendet werden können, die in den unterschiedlichsten Schneidstoffsorten zur Verfügung stehen und mit denen das Werkstück bei der Schlichtbearbeitung so bearbeitet werden kann, daß bei niedrigen Schneidstoffkosten und einer einwandfreien Späneabfuhr eine hohe Genauigkeit am Werkstück erreicht wird und nur geringe Schnittdrücke entstehen.

Diese Aufgabe wird beim gattungsgemäßen Verfahren erfindungsgemäß mit den kennzeichnenden Merkmalen des Anspruches 1 und beim gattungsgemäßen scheibenförmigen Werkzeug erfindungsgemäß mit den kennzeichnenden Merkmalen des Anspruches 5 gelöst.

Beim erfindungsgemäßen Verfahren erfolgt die Schlichtbearbeitung nicht mehr im Drehräumverfahren, sondern durch ein Einstechschlichtdrehen, bei dem das scheibenförmige Werkzeug während der Schlichtbearbeitung nicht mehr um seine Achse dreht. Für das Einstechdrehen können herkömmliche, konstruktiv einfach ausgebildete Wendeschneidplatten verwendet werden, die drei- oder viereckig ausgebildet sind und drei oder vier Schneidkanten haben. Dadurch fallen bei Durchführung des erfindungsgemäßen Verfahrens und bei Verwendung des erfindungsgemäßen Werkzeuges nur niedrige Schneidstoffkosten an. Die konstruktiv einfach ausgebildeten Wendeplatten als Schlichtschneiden benötigen auch nur einfache Plattensitze im Werkzeug, so daß dessen Herstellung einfach und kostengünstig möglich ist. Infolge der Aufteilung des Einstechdrehens auf verschiedene Einstechschneiden ergibt sich eine gleiche Schneidbreite und damit auch Spanbreite bei unterschiedlichem Schlichtaufmaß. Beim Einstechdrehen entstehen nur kurze Rollenspäne, so daß keine Schwierigkeiten bei der Spanabfuhr bestehen. Das erfindungsgemäße Verfahren und das erfindungsgemäße Werkzeug können darum auch bei automatisierten Maschinen eingesetzt werden. Beim Einstechdrehen können die Einstechschneiden im Gegensatz zum Drehräumverfahren rechtwinklig im Werkzeug angeordnet sein, so daß eine einfache Schneidenvermessung möglich ist. Auch bei unterschiedlichem Schlichtaufmaß entsteht ein gleichbleibender Schnittdruck. Außerdem bleibt die Schneidgeometrie während des gesamten Einstechdrehvorganges gleich, so daß entsprechend hohe gleichbleibende Genauigkeiten am Werkstück erreichbar sind. Beim aufgeteilten Einstechdrehen sind die Schnittdrücke verhältnismäßig gering, so daß das Werkstück bei der Schlichtdrehbearbeitung nicht ausbiegt. Dadurch tritt das beim Drehräumen nachteilige Nachreiben der Schneide auf dem Werkstück nicht auf, das im Anschluß an den Spanabtrag als Folge der überhöhten Normalkraft zum Ende der Spanbildung auftritt. Beim Einstechdrehen tritt dieses Nachreiben nicht auf, so daß die Einstechschneiden auch nicht übermäßig beansprucht werden. Mit dem erfindungsgemäßen Verfahren und dem erfindungsgemäßen Werkzeug können Kurbelwellen, Nockenwellen, Getriebewellen und andere rotationssymmetrische Werkstückflächen im Schlichtdrehverfahren bearbeitet werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Seitenansicht einen Teil eines erfindungsgemäßen scheibenförmigen Drehwerkzeuges,
- Fig. 2: eine Abwicklung der Schneidenanordnung auf dem Drehwerkzeug gemäß Fig. 1,
- Fig. 3: in schematischer Darstellung die Bearbeitung eines Zapfens einer Kurbelwelle durch die verschiedenen Schneiden des Drehwerkzeuges gemäß Fig. 1,
- Fig. 4: in Seitenansicht einen Zapfen einer Kurbelwelle, der mit dem erfindungsgemäßen Drehwerkzeug schlichtbearbeitet wird,
- Fig. 5: in schematischer Darstellung die zur Schlichtbearbeitung des Kurbelwellenzapfens dienenden Schneiden des erfindungsgemäßen Drehwerkzeuges,
- Fig. 6: eine Abwicklung des Drehwerkzeuges mit den für die Schlichtbearbeitung vorgesehenen Schneiden,
- Fig. 7: die Eingriffsverhältnisse während des erfindungsgemäßen Verfahrens zur Schlichtbearbeitung des Kurbelwellenzapfens,
- Fig. 8: in einer Darstellung entsprechend Fig. 7 die Eingriffsverhältnisse bei der Schlichtbearbeitung des Kurbelwellenzapfens durch das bekannte Drehräumverfahren.

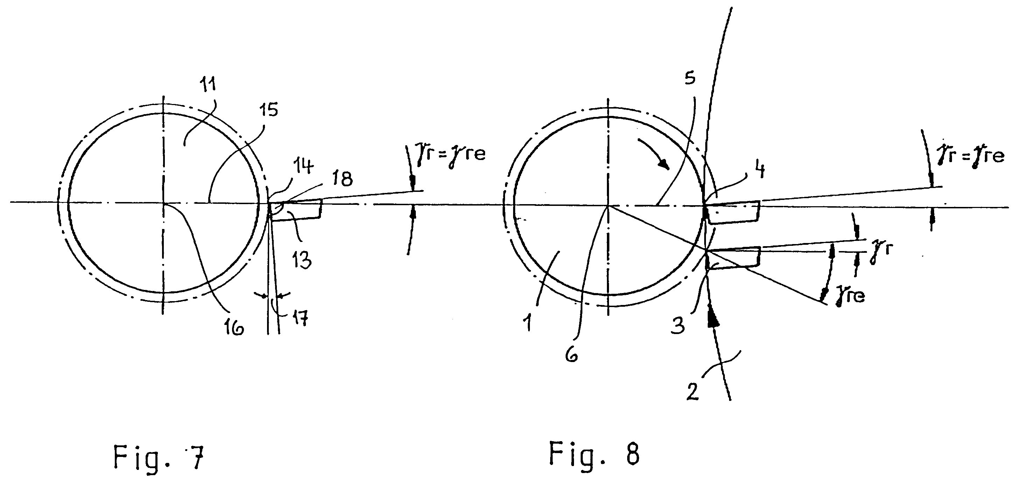

Bei der Bearbeitung von Kurbelwellen ist es bekannt, die zylindrischen Flächen (Hub- und Hauptlager) bei der Schruppbearbeitung im Drehverfahren und bei der Schlichtbearbeitung im Drehräumverfahren zu bearbeiten. Hierbei wird die Kurbelwelle 1 mit hoher Geschwindigkeit um die Achse der Hub- oder Hauptlager gedreht, während das Drehräumwerkzeug 2 (Fig. 8) im Gegen- oder im Gleichlauf mit geringer Geschwindigkeit gedreht wird. Mit der strichpunktierten Linie ist der Ausgangsdurchmesser des Kurbelwellenzapfens gekennzeichnet, der nach dem Drehräumvorgang den durch die ausgezogene Linie gekennzeichneten Durchmesser aufweist. Beim ersten Eingriff der Schneide 3 des Drehräumwerkzeuges mit der Kurbelwelle 1 beträgt der Spanwinkel γᵣ etwa 5°, während der wirksame Spanwinkel γᵣₑ etwa 30° beträgt. Während des Materialabtrages an der Kurbelwelle 1 ändert sich der wirksame Spanwinkel ständig, bis er am Ende des Drehräumvorganges gleich groß ist wie der Spanwinkel γᵣ. Dann liegt die Schneidkante 4 der Schneide 3 auf der Verbindungslinie 5 zwischen der Drehachse 6 der Kurbelwelle 1 und der (nicht dargestellten) Drehachse des Werkzeuges 2. Da sich der effektive Spanwinkel γᵣₑ während des Drehräumvorganges ständig ändert, können optimale Schnittverhältnisse nicht erreicht werden. Zu Beginn des Drehräumvorganges dringt die Schneide 3 negativ in die Kurbelwelle 1 ein, wie es in Fig. 8 dargestellt ist. Dadurch wird eine hohe Normalkraft erzeugt, wodurch an der Schneide 3 ein sehr starker Schneidenverschleiß auftritt. Er führt in Verbindung mit der hohen Normalkraft zu einem verstärkten Ausbiegen der Kurbelwelle 1 während der Drehräumbearbeitung. Als Folge davon tritt in hohem Maße eine Ratterneigung beim Schlichtdrehräumen auf, die auch zu Genauigkeitseinbußen führt.

Diese Nachteile werden dadurch vermieden, daß die Schlichtbearbeitung der Kurbelwelle ausschließlich im Einstechdrehverfahren durchgeführt wird. Fig. 7 zeigt schematisch, wie die Schneide 13 des Drehwerkzeuges mit ihrer Schneidkante 14 auf der Verbindungsgeraden 15 zwischen der Drehachse 16 der Kurbelwelle 11 und der (nicht dargestellten) Drehachse des Drehwerkzeuges in die Kurbelwelle 11 eindringt. Unabhängig vom Abtragsgrad ändert sich die Lage der Schneiden 13 bezüglich der Kurbelwelle 11 nicht, d.h. der Spanwinkel γᵣ ist stets gleich dem wirksamen Spanwinkel γᵣₑ. Dadurch herrschen während des gesamten Schlichtdrehvorganges stets gleiche Eingriffsverhältnisse an der Schneide, so daß während dieses gesamten Bearbeitungsvorganges die optimalen Schnittverhältnisse eingehalten werden können. Der Freiwinkel 17 der Schneide 13 kann sehr gering gehalten werden, so daß der die Schneidkante 14 enthaltende Keilwinkel 18 entsprechend groß sein kann. Die Schneide 13 kann darum eine optimale Schneidengeometrie aufweisen. Der Freiwinkel 17 ist bei der Schneide 3 des Drehräumwerkzeuges 2 wesentlich größer, so daß der Keilwinkel der Schneide im Schneidkantenbereich wesentlich kleiner wird und die Schneide damit eine geringere Stabilität hat.

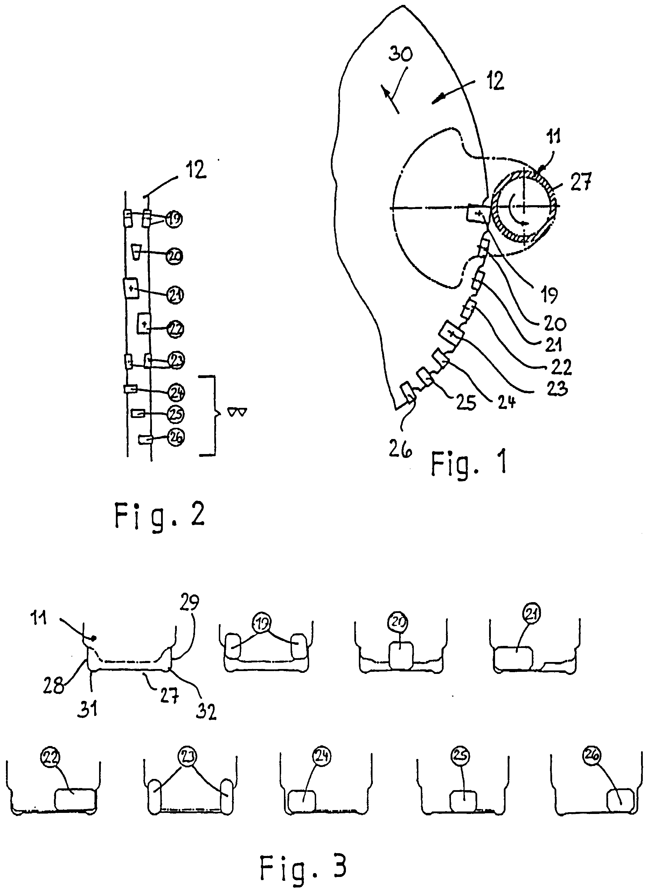

Die Fig. 1 und 2 zeigen beispielhaft einen Teil eines Drehwerkzeuges 12. Am Umfang ist es mit in Umfangsrichtung hintereinander liegenden Schneiden 19 bis 26 versehen, mit denen an der Kurbelwelle 11 unterschiedliche Bearbeitungen vorgenommen werden. Mit den Schneiden 24 bis 26 erfolgt die Schlichtbearbeitung der Kurbelwellenzapfen 27. Die Schneiden 19 bis 26 bilden einen Schneidensatz. Am Umfang des Drehwerkzeuges 12 sind mehrere solcher Schneidensätze vorgesehen, so daß das Drehwerkzeug 12 eine lange Einsatzdauer hat.

Fig. 3 zeigt beispielhaft, wie mit den einzelnen Schneiden 19 bis 26 im Drehverfahren die Kurbelwelle 11 bearbeitet wird. Von der Kurbelwelle 11 sind schematisch die Umfangsfläche eines Zapfens 27 sowie die daran anschließenden Ölbunde 28 und 29 dargestellt. In der linken oberen Darstellung der Fig. 3 ist mit der strichpunktierten Linie der Rohzustand des Kurbelwellenzapfens 27 dargestellt. Er wird im Einstech-Drehverfahren so weit spanend bearbeitet, bis sich die durch die ausgezogene Linie in Fig. 3 angegebene Form ergibt. Zunächst werden mit den an den Seitenflächen des scheibenförmigen Drehwerkzeuges 12 befindlichen Schneiden 19 die Enden 28, 29 des Kurbelzapfens 27 gedreht (Fig. 1). Nach Beendigung dieser ersten Drehoperation wird das Drehwerkzeug 12 radial zurückgefahren, in Pfeilrichtung 30 (Fig. 1) gedreht und wieder radial an die Kurbelwelle 11 herangefahren. Nunmehr wird mit der Schneide 20 bei stehendem Drehwerkzeug 12 und rotierender Kurbelwelle 11 der mittlere Bereich des Kurbelwellenzapfens 27 grob bearbeitet.

Nach Beendigung dieser zweiten Drehoperation wird das Werkzeug 12 wiederum radial von der Kurbelwelle 11 zurückgefahren, in Pfeilrichtung 30 gedreht und wieder an die Kurbelwelle 11 herangefahren. Auf diese Weise werden nacheinander die Schneiden 21 bis 23 zum Eingriff mit der Kurbelwelle 11 gebracht (Fig. 3). Mit den Schneiden 21 und 22 wird der Kurbelwellenzapfen 27 über seine gesamte Länge nahezu auf den Enddurchmesser grob abgedreht.

In einer nächsten Drehoperation werden die Schneiden 23 in Eingriff mit der Kurbelwelle 11 gebracht. Sie befinden sich einander gegenüberliegend oder versetzt an den Seitenflächen des scheibenförmigen Drehwerkzeuges 12 (Fig. 2). Mit den Schneiden 23 wird jeweils ein Ölbund 28 und 29 am Übergang vom Kurbelwellenzapfen 27 zu den seitlichen Wangen bearbeitet und wenn erforderlich, die Einstiche 31 und 32 eingearbeitet.

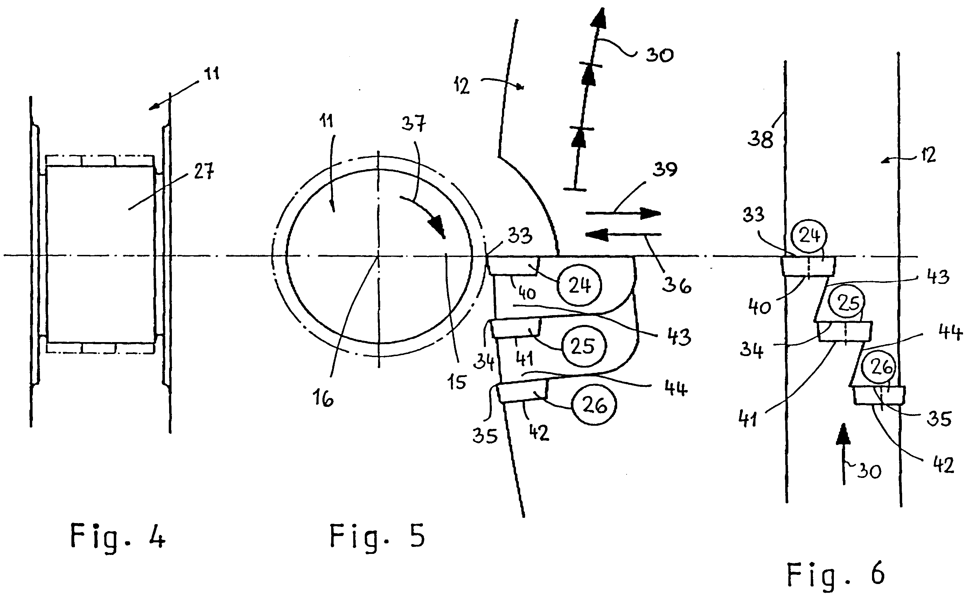

Nach den verschiedenen Drehbearbeitungen mit den Schneiden 19 bis 23 hat der Kurbelwellenzapfen 27 nahezu seine gewünschte Endform. Er wird nunmehr mit den Schneiden 24 bis 26 noch im Schlichtverfahren durch Einstechdrehen feinbearbeitet. Die Einstechschneiden 24 bis 26 werden nacheinander in Eingriff mit der Kurbelwelle 11 gebracht, wie dies in Fig. 3 dargestellt ist. Die Einstechschneiden 24 bis 26 haben parallel zu der von der Drehachse 16 der Kurbelwelle 11 und der (nicht dargestellten) Drehachse des Drehwerkzeuges 12 aufgespannten Ebene 15 liegende Schneidkanten 33 bis 35 (Fig. 5 und 6), die zeitlich nacheinander in diese Ebene 15 gebracht werden (Fig. 5 und 6). Zunächst befindet sich das Drehwerkzeug 12 mit seinen Einstechschneiden 24 bis 26 noch außer Eingriff mit der Kurbelwelle 11. Das Drehwerkzeug 12 wird dann in der beschriebenen Weise in Pfeilrichtung 30 gedreht, bis die erste Einstechschneide 24 mit ihrer Schneidkante 33, in Drehrichtung der Kurbelwelle 11 bzw. des Drehwerkzeuges 12 gesehen (Fig. 5), in der Ebene 15 liegt. Dann wird das Drehwerkzeug 12 in Richtung auf die Kurbelwelle 11 in Pfeilrichtung 36 (Fig. 5) zugestellt. Die Kurbelwelle 11 dreht während der Schlichtbearbeitung in Drehrichtung 37, während das Drehwerkzeug 12 weiterhin während der Schlichtbearbeitung nicht dreht. Die Einstechschneide 24 wird parallel zur Ebene 15 mit der Kurbelwelle 11 so lange in Eingriff gebracht, bis sie das gewünschte Material vom Kurbelwellenzapfen 27 abgedreht hat und der Kurbelwellenzapfen den gewünschten Radius erreicht, der in Fig. 5 mit der ausgezogenen Linie angegeben ist.

Die Breite der Einstechschneide 24 beträgt nur einen Teil der Länge des zu bearbeitenden Kurbelzapfens 27. Im dargestellten Ausführungsbeispiel ist die Einstechschneide 24 am Umfang des Drehwerkzeuges 12 so angeordnet, daß sie sich von der einen Seitenfläche 38 des Drehwerkzeuges aus erstreckt (Fig. 6).

Die in Umfangsrichtung des Drehwerkzeuges 12 mit Abstand nachfolgende Schlichtschneide 25 ist vorzugsweise gleich ausgebildet wie die Schlichtschneide 24. In Umfangrichtung des Drehwerkzeuges 12 gesehen, überlappt die Einstechschneide 25 die Einstechschneide 24. In gleicher Weise ist auch die in Umfangsrichtung mit Abstand nachfolgende Einstechschneide 26 überlappend zur Einstechschneide 25 am Umfang des Drehwerkzeuges 12 angeordnet.

Sobald mit der Schneide 24 der gewünschte Radius des Kurbelwellenzapfens 27 erreicht ist, wird das Drehwerkzeug 12 in Pfeilrichtung 39 (Fig. 5) radial zurückgefahren, bis die Schneide außer Eingriff mit der Kurbelwelle 11 ist. Anschließend oder auch gleichzeitig während dieses Zurückfahrens wird das Drehwerkzeug 12 in Pfeilrichtung 30 so weit um seine Achse gedreht, bis die nachfolgende Einstechschneide 25 mit ihrer Schneidkante 34 in der Ebene 15 liegt. Anschließend wird das Drehwerkzeug 12 in Pfeilrichtung 36 wieder zugestellt, wobei die Schneidkante 34 in der Ebene 15 liegt (Fig. 5). Die Schneide 25 wird wiederum so lange zugestellt, bis der Kurbelwellenzapfen 27 den gewünschten Radius erreicht hat. Mit der Einstechschneide 25 wird ein mittlerer Bereich der Mantelfläche des Kurbelwellenzapfens 27 bearbeitet.

Sobald mit der Einstechschneide 25 die Schlichtbearbeitung abgeschlossen ist, wird das Drehwerkzeug 12 in der beschriebenen Weise weitergedreht, so daß nunmehr mit der Einstechschneide 26 der restliche Teil der Mantelfläche des Kurbelwellenzapfens 27 im Drehverfahren schlichtbearbeitet werden kann.

Je nach Dicke des Drehwerkzeuges 12 kann eine unterschiedliche Zahl von Schlichtschneiden in Umfangsrichtung mit Abstand und gestuft zueinander angeordnet sein. Die einzelnen Einstechschneiden können mit geringem Abstand in Umfangsrichtung des Drehwerkzeuges hintereinander angeordnet sein, so daß nur äußerst kurze Schaltzeiten notwendig sind, um diese Schlichtschneiden nacheinander mit der Kurbelwelle 11 in Eingriff zu bringen. Dadurch kann die Kurbelwelle in kürzester Zeit sowohl grob als auch fein bearbeitet werden. Da das Drehwerkzeug 12 während der gesamten Bearbeitung der Kurbelwelle 11, insbesondere auch während der Schlichtbearbeitung, nicht um seine Achse dreht, die Schlichtschneiden 24 bis 26 mit ihren Schneidkanten 33 bis 35 parallel zur Drehachse des Werkzeuges 12 liegen und die Schneidkanten bei der Schlichtbearbeitung in der Ebene 15 liegen, in Drehrichtung der Kurbelwelle 11 gesehen, bleibt die Schneidgeometrie während des gesamten Zerspanvorganges gleich. Dadurch sind hohe gleichbleibende Genauigkeiten an der Kurbelwelle 11 möglich. Infolge der gestuften Schlichtbearbeitung ergibt sich ein kleiner Schnittdruck, der von der zu bearbeitenden Kurbelwelle 11 ohne unzulässiges Ausbiegen aufgenommen werden kann. Dadurch tritt das bei der Drehräumbearbeitung im Anschluß an den Spanabtrag beobachtete Nachreiben der Schneide auf dem Werkstück nicht auf. Dieses Nachreiben ist eine direkte Folge der beim Drehräumen auftretenden überhöhten Normalkraft zum Ende der Spanbildung. Diese hohe Normalkraft bedeutet gleichzeitig auch eine große Systemauffederung, die erst abgebaut sein muß, bevor Werkstück und Werkzeug außer Kontakt kommen. Diese Probleme treten beim aufgeteilten Einstechschlichtdrehen nicht auf, so daß sehr hohe Genauigkeiten an der Kurbelwelle erreicht werden. Auch bei unterschiedlichem Schlichtaufmaß ergibt sich ein gleichbleibender Schnittdruck. Infolge der beschriebenen gestuften Anordnung der Einstechschneiden 24 bis 26 wird ferner eine gleiche Schneidbreite und damit Spanbreite auch bei unterschiedlichem Schlichtaufmaß erreicht. Durch das Einstechdrehen werden nur kurze Rollenspäne gebildet. Dadurch treten bei der Spanabfuhr keine Schwierigkeiten auf. Darum kann dieses Drehwerkzeug 12 und dieses Verfahren auch bei automatisierten Maschinen problemlos eingesetzt werden.

Da die Schneidkanten 33 bis 35 parallel zur Drehachse des Werkzeuges 12 liegen, ist eine einfache Schneidenvermessung möglich. Wie die Fig. 5 und 6 zeigen, ist das Drehwerkzeug 12 zur Befestigung der Einstechschneiden 24 bis 26 mit ebenen Anlageflächen 40 bis 42 versehen, die in Umfangsrichtung des Drehwerkzeug 12 mit Abstand hintereinander liegen und jeweils axial gegeneinander versetzt angeordnet sind. Auf ihnen werden die Schneiden 24 bis 26 befestigt. Die Anlageflächen 40 bis 42 sind durch Schrägflächen 43 und 44 (Fig. 5 und 6) miteinander verbunden, die sich in Richtung auf die Drehachse des Werkzeuges 12 über die Schneiden 24 bis 26 hinaus erstrecken (Fig. 5). Als Schneiden können herkömmliche ISO-Wendeschneidplatten verwendet werden, die in unterschiedlichsten Materialien auf dem Markt erhältlich sind. Die Schneiden können aus Hartmetall, aus beschichtetem Hartmetall, aus Keramik, aus Cermet oder dgl. gestehen. Die Wendeschneidplatten sind drei- oder viereckig ausgebildet und haben dementsprechend drei oder vier Schneidkanten, die alle zum Einsatz gebracht werden können. Dadurch ergeben sich niedrige Schneidstoffkosten. Infolge dieser einfachen Ausbildung der Einstechschneiden 24 bis 26 sind auch die Sitze 40 bis 42 im Drehwerkzeug 12 einfach ausgebildet. Da die Schneiden 24 bis 26 so im Drehwerkzeug 12 angeordnet werden können, daß die Schneidkanten 33 bis 35 parallel zur Drehachse des Werkzeuges liegen, benötigen sie keine besondere Formgebung, sondern können als gerade Kanten ausgebildet sein.

## Patentansprüche

1. Verfahren zur spanenden Bearbeitung von Rotationsflächen an Werkstücken, vorzugsweise an Kurbelwellen, bei dem das Werkstück während der Bearbeitung rotiert und mit einem scheibenförmigen Werkzeug, das am Umfang mit Schneiden versehen ist, eine Grobbearbeitung des Werkstückes durch Drehen durchgeführt und anschließend eine Schlichtbearbeitung vorgenommen wird,
dadurch gekennzeichnet, daß zur Schlichtbearbeitung der Rotationsflächen des Werkstückes (11) ein aufgeteiltes Einstechdrehen durchgeführt wird, bei dem zeitlich nacheinander in in Achsrichtung der zu bearbeitenden Rotationsflächen nebeneinander liegenden, einander überlappenden Bereichen, in Umfangsrichtung des Werkzeuges (12) gesehen, Material vom Werkstück (11) abgetragen wird.

2. Verfahren nach Anspruch 1,
dadurch gekennzeichnet, daß die Einstechschneiden (24 bis 26) zur Schlichtbearbeitung mit ihren Schneidkanten (33 bis 35) auf die Verbindungsgerade (15) zwischen der Drehachse (16) des Werkstückes (11) und der Drehachse des Werkzeuges (12) gebracht und dann gegen das Werkstück (11) zugestellt werden.

3. Verfahren nach Anspruch 1 oder 2,
dadurch gekennzeichnet, daß das Werkzeug (12) nach Beendigung des Schlichteinstechdrehens mittels einer Schlichtschneide (24 bis 26) radial zurückgefahren, anschließend um seine Achse gedreht und mit der nächsten Schlichtschneide radial gegen das Werkstück (11) zugestellt wird.

4. Verfahren nach Anspruch 1 oder 2,
dadurch gekennzeichnet, daß das Werkzeug (12) nach Beendigung des Schlichteinstechdrehens mittels einer Schlichtschneide (24 bis 26) radial zurückgefahren, gleichzeitig um seine Achse gedreht und mit der nächsten Schlichtschneide radial gegen das Werkstück (11) zugestellt wird.

5. Scheibenförmiges Werkzeug zur Durchführung des Verfahrens nach einem der Ansprüche 1 bis 4, das am Umfang mit Schneiden zur Grobbearbeitung und zum Schlichten versehen ist,
dadurch gekennzeichnet, daß das Werkzeug (12) zur Schlichtbearbeitung der Rotationsflächen des Werkstückes (11) in Umfangsrichtung mit Abstand hintereinander und jeweils axial gegeneinander versetzt angeordnete Schlichtschneiden (24 bis 26) aufweist, deren Schneidkanten, in Umfangsrichtung des Werkzeuges (12) gesehen, einander überlappende Arbeitsbereiche haben.

6. Werkzeug nach Anspruch 5,
dadurch gekennzeichnet, daß die Schlichtschneiden (24 bis 26) parallel zur Drehachse des Werkzeuges (12) verlaufende Schneidkanten (33 bis 35) haben.

7. Werkzeug nach Anspruch 5 oder 6,
dadurch gekennzeichnet, daß die Schlichtschneiden (24 bis 26) als Wendeplatten ausgebildet sind.

8. Werkzeug nach einem der Ansprüche 5 bis 7,
dadurch gekennzeichnet, daß die Schlichtschneiden (24 bis 26) jeweils mindestens zwei Schneidkanten (33 bis 35) haben.

9. Werkzeug nach einem der Ansprüche 5 bis 8,
dadurch gekennzeichnet, daß es für die Schlichtschneiden (24 bis 26) ebene Anlageflächen (40 bis 42) aufweist, auf welchen die Schlichtschneiden befestigt sind.

## Claims

1. A method of cutting surfaces of revolution on workpieces, preferably on crankshafts, with which the workpiece rotates during machining and rough-machining of the workpiece is carried out through turning using a disc-shaped tool whose circumference is provided with cutters and then finish-machining is carried out, characterised in that for finish-machining of the surfaces of revolution of the workpiece (11), apportioned recessing turning is carried out with which in chronological succession in regions which overlap one another and are located side by side in the axial direction of the surfaces of revolution to be machined, viewed in the circumferential direction of the tool (12), material is removed from the workpiece (11).

2. A method in accordance with Claim 1, characterised in that the cutting edges (33 to 35) of the recessing cutters (24 to 26) for finish-machining are brought onto the connecting straight line (15) between the axis of rotation (16) of the workpiece (11) and the axis of rotation of the tool (12) and are then advanced against the workpiece (11).

3. A method in accordance with Claim 1 or 2, characterised in that the tool (12) is moved backwards radially after completion of the finishing recessing turning by means of a finishing cutter (24 to 26), is then rotated about its axis and is advanced radially against the workpiece (11) with its next finishing cutter.

4. A method in accordance with Claim 1 or 2, characterised in that the tool (12) is moved backwards radially after completion of the finishing recessing turning by means of a finishing cutter (24 to 26), is simultaneously rotated about its axis and is radially advanced against the workpiece with its next finishing cutter.

5. A disc-shaped tool for implementing the method in accordance with any one of Claims 1 to 4, the circumference of which is provided with cutters for rough-machining and for finishing, characterised in that for finish-machining of the surfaces of revolution of the workpiece (11), the tool (12) has finishing cutters (24 to 26) which are arranged spaced apart behind one another in the circumferential direction and are arranged axially offset in relation to one another, viewed in the circumferential direction of the tool (12) the cutting edges of these finishing cutters (24 to 26) having overlapping working regions.

6. A tool in accordance with Claim 5, characterised in that the finishing cutters (24 to 26) have cutting edges (33 to 35) running parallel to the axis of rotation of the tool (12).

7. A tool in accordance with Claim 5 or 6, characterized in that the finishing cutters (24 to 26) are in the form of turning plates.

8. A tool in accordance with any one of Claims 5 to 7, characterized in that the finishing cutters (24 to 26) each have at least two cutting edges (33 to 35).

9. A tool in accordance with any one of Claims 5 to 8, characterised in that it has plane attachment surfaces (40 to 42) for the finishing cutters, on which the finishing cutters are secured.

## Revendications

1. Procédé pour l'usinage par enlèvement de matière de surfaces de révolution sur des pièces d'usinage, de préférence de vilebrequins, dans lequel la pièce est inise en rotation pendant l'usinage et effectue, avec un outil en forme de disque qui est pourvu à la périphérie de tranchants, un dégrossissage de la pièce par tournage, et ensuite un finissage,
caractérisé en ce que pour le finissage des surfaces de révolution de la pièce (11), on effectue un tournage de plongée subdivisé, dans lequel on enlève de la matière de la pièce (11) successivement dans le temps dans des régions en chevauchement situées les unes à côté des autres en direction axiale des surfaces de révolution à usiner, vu en direction périphérique de l'outil (12).

2. Procédé selon la revendication 1,
caractérisé en ce que, pour le finissage, les tranchants de plongée (24 à 26) sont amenés avec leurs arêtes de tranchant (33 à 35) sur la ligne de liaison (15) entre l'axe de rotation (16) de la pièce (11) et l'axe de rotation de l'outil (12), et en ce qu'ils sont ensuite appliqués contre la pièce (11).

3. Procédé selon l'une ou l'autre des revendications 1 et 2,
caractérisé en ce que, après finition du tournage plongée de finissage au moyen d'un tranchant de finissage (24 à 26), l'outil (12) est déplacé radialement en retour, en ce qu'il est ensuite tourne autour de son axe et appliqué avec le tranchant de finissage suivant radialement contre la pièce (11).

4. Procédé selon l'une ou l'autre des revendications 1 et 2,
caractérisé en ce que l'outil (12) est déplacé radialement en retour, après finition de la rotation en plongée de finissage au moyen d'un tranchant de finissage (24 à 26), simultanément tourné autour de son axe et appliqué avec le tranchant de finissage suivant radialement contre la pièce (11).

5. Outil en forme de disque pour la mise en oeuvre du procédé selon l'une quelconque des revendications 1 à 4, qui est pourvu à la périphérie de tranchants pour le dégrossissage et le finissage,
caractérisé en ce que l'outil (12) présente, pour le finissage des surfaces de révolution de la pièce (11), des tranchants de finissage (24 à 26) agencés à distance les uns derrière les autres en direction périphérique et respectivement en décalage axial les uns par rapport aux autres, dont les arêtes de tranchant présentent des régions d'usinage en chevauchement, vues en direction périphérique de l'outil (12).

6. Outil selon la revendication 5,
caractérisé en ce que les tranchants de finissage (24 à 26) possèdent des arêtes de tranchant (33 à 35) s'étendant parallèlement à l'axe de rotation de l'outil (12).

7. Outil selon l'une ou l'autre des revendications 5 et 6,
caractérisé en ce que les tranchants de finissage (24 à 26) sont réalisés sous la forme de plaquettes réversibles.

8. Outil selon l'une quelconque des revendications 5 à 7,
caractérisé en ce que les tranchants de finissage (24 à 26) possèdent chacun au moins deux arêtes de tranchant (33 à 35).

9. Outil selon l'une quelconque des revendications 5 à 8,
caractérisé en ce qu'il présente, pour les tranchants de finissage (24 à 26), des surfaces d'appui planes (40 à 42), sur lesquelles sont fixés les tranchants de finissage.
